# EUROPEAN PATENT APPLICATION

(11) **EP 2 420 342 A1**
(43) Date of publication of application: **22.02.2012**
(21) Application number: 10764507.9
(22) Date of filing: 15.04.2010
(51) Int. Cl.: B23K 9/23, B23K 9/028, B23K 33/00, B23K 9/00, B23K 103/10, B62D 21/00

(54) **WELD JOINT OF ALUMINUM ALLOY MEMBER**

(30) Priority: 15.04.2009 JP 2009099265
(71) Applicant: Honda Motor Co., Ltd., Minato-ku Tokyo 107-8556 (JP); F-TECH INC., Minamisaitama-gun, Saitama 346-0194 (JP)
(72) Inventor: YAHABA, Takanori, Wako-shi Saitama 351-0193 (JP); TAKAHASHI, Hayato, Wako-shi Saitama 351-0193 (JP); HIRANO, Daisuke, Hagagun Tochigi 321-3325 (JP); SHIMADA, Takashi, Hagagun Tochigi 321-3325 (JP)
(74) Representative: Feller, Frank
(86) International application number: PCT/JP2010/056766
(87) International publication number: WO 2010/119925

(57) **Abstract**

Disclosed is a weld joint of an aluminum alloy member formed by joining one end of a wrought material (12) to one end of a cast member (11). The cast member has a chamfer (14), and an inserting portion (13) which extends from the lower end of the chamfer (14) toward the distal end of the case member along the lower surface of the wrought material. The distance (L) from the lower end of the chamfer to the end face (12a) at one end of the wrought material is set equal to 1.0-1.7 times of the thickness (T) of the wrought material, and the chamfer is inclined so that the angle of a groove between the chamfer and the end face (12a) at one end of the wrought material is 15-45°.

## Description

### TECHNICAL FIELD

The present invention relates to a weld joint obtained by joining one end of a wrought material formed of one of aluminum and an aluminum alloy to an end part of an aluminum alloy cast member.

### BACKGROUND ART

Weld structures formed by joining an aluminum alloy wrought material to an aluminum alloy cast member have been used in actual practice. The technique disclosed in Patent Literature 1 is a conventional technique relating to such a weld structure.

The weld structure described in Patent Literature 1 is a subframe. The subframe is manufactured by welding a lid body to a frame body. The frame body is an aluminum alloy cast member, and the lid body is an aluminum alloy wrought material.

The lid body is welded to the frame body along the entire circumference. Because so-called full circumference welding is performed, the welding length is considerably increased and the welding cost is raised. In addition, the welding strain is increased, and the correction cost for correcting the strain is also increased. Manufacturing expenses for the weld structure described in Patent Literature 1 are therefore increased.

A conventional structure whose manufacturing expenses can be made lower than those in Patent Literature 1 is described based on Figs. 9 and 10 hereof.

Fig. 9 is a view showing an example of a conventional weld structure, wherein a subframe 100, which is the weld structure, is a square frame obtained by connecting a right-side cast member 101, a left-side cast member 102, and angular tube-shaped wrought materials 103, 104 using four weld parts 105.

As one way to reduce the weight of a vehicle, the cast members 101, 102 are made to be aluminum alloy cast members, and aluminum or aluminum alloy wrought materials are used for the wrought materials 103, 104.

Fig. 10 is a cross-sectional view of a conventional weld part, wherein the wrought material 103 is inserted in the cast member 101, and both members are joined by lap-fillet MIG welding.

Gaps 106, 106 must be provided to an inserting portion in order to smoothly insert the wrought material 103 in the cast member 101.

The cast member 101 is a casting, and therefore inevitably contains gas. In addition, the melting point of the aluminum alloy casting is lower than the melting point of the aluminum alloy wrought material.

When lap-fillet MIG welding is performed under such conditions, the molten metal runs (leaks) from the gaps 106, 106. In addition, the wrought material 103 is more difficult to melt than the cast member 101.

Ensuring a throat 108 in a bead 107 becomes difficult when these main factors overlap. Defects such as insufficient strength and degraded quality of the weld part 105 occur when the throat 108 is insufficient.

### Prior Art Literature

### Patent Literature

Patent Literature 1: JP-A 2004-210013

### SUMMARY OF INVENTION

### Technical Problem

An object of the present invention is to provide a technique capable of preventing insufficient strength and degraded quality of a weld joint obtained by joining one end of an aluminum or aluminum alloy wrought material to an end part of an aluminum alloy cast member.

### Solution to Problem

According to the present invention, there is provided a weld joint of an aluminum alloy member obtained by joining an end part of a wrought material formed of one of aluminum or an aluminum alloy to one end of a cast member formed of an aluminum alloy, wherein the cast member has a chamfer extending from an upper surface of the cast member toward a lower surface until a midway of a thickness of the cast member, and an inserting portion extending along a lower surface of the wrought material from a lower end of the chamfer toward a distal end of the cast member, a distance from the lower end of the chamfer to an end face at one end part of the wrought material is set at 1.0 to 1.7 times a thickness of the wrought material, the chamfer is inclined so that a groove angle with the end face at one end of the wrought material is 15 to 45°, and the groove is welded to cause the inserting portion to act as a backing metal.

### Advantageous Effects of Invention

In the present invention, there is no concern that molten metal will leak out because an inserting portion assumes the role of a backing metal. The high-melting wrought material can be fully melted because molten metal accumulates in the groove. As a result, strength can be increased and a high-quality weld joint can be obtained.

### BRIEF DESCRIPTION OF DRAWINGS

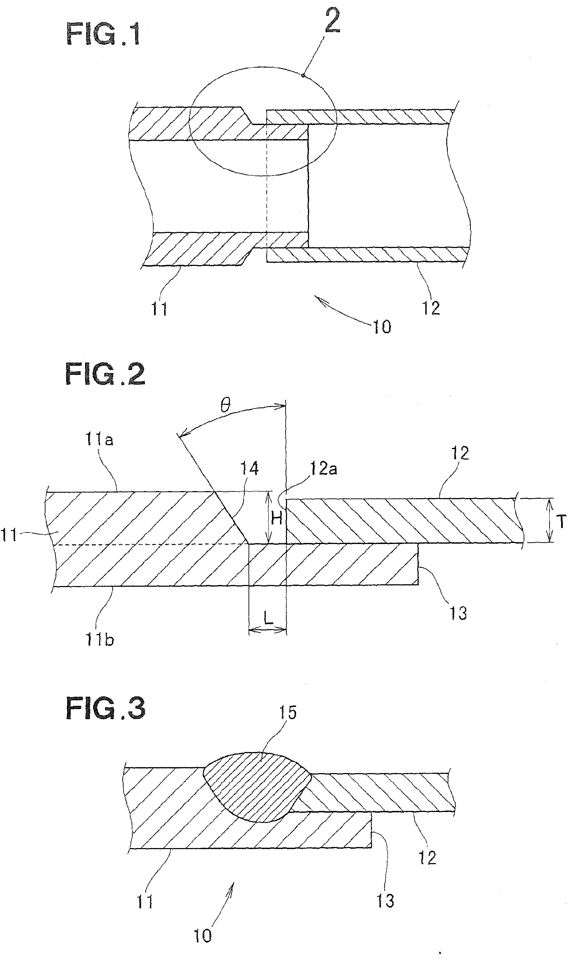

Fig. 1 is a schematic view showing a wrought material set in a cast member;
Fig. 2 is an enlarged view of section 2 of Fig. 1;
Fig. 3 is a cross-sectional view showing a weld part of a weld joint according to the present invention;

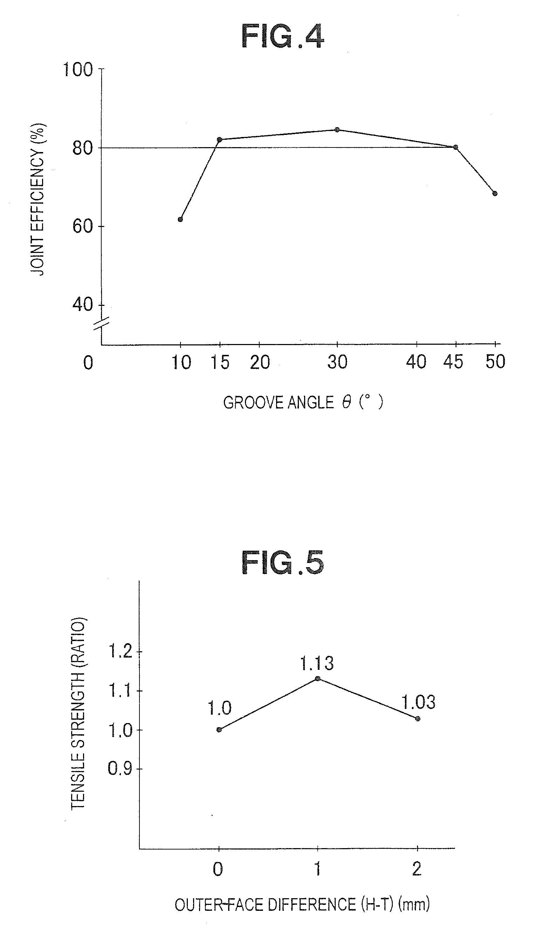

Fig. 4 is a graph showing a correlation between a groove angle and joint efficiency;
Fig. 5 is a graph showing a correlation between an outer-face difference and tensile strength;

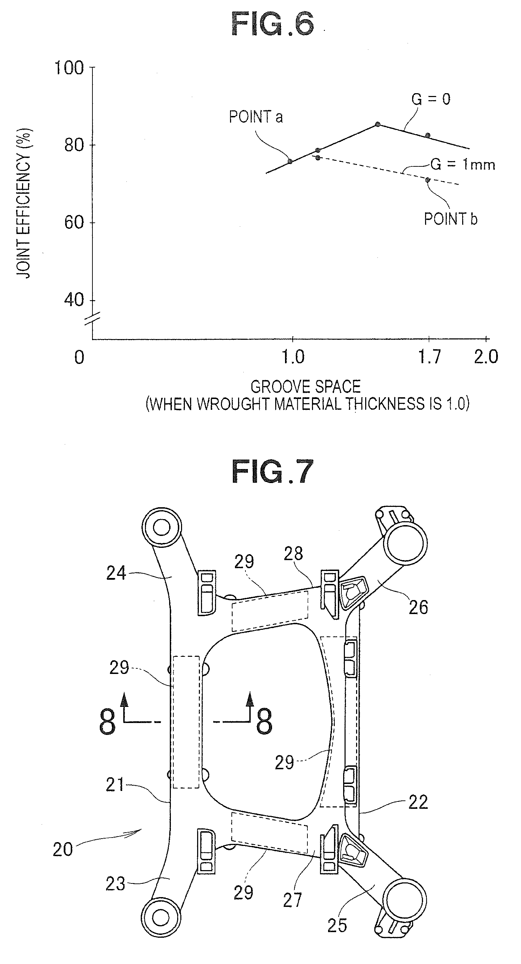

Fig. 6 is a graph showing a correlation between a groove space and the joint efficiency;
Fig. 7 is a top plan view of a weld structure;

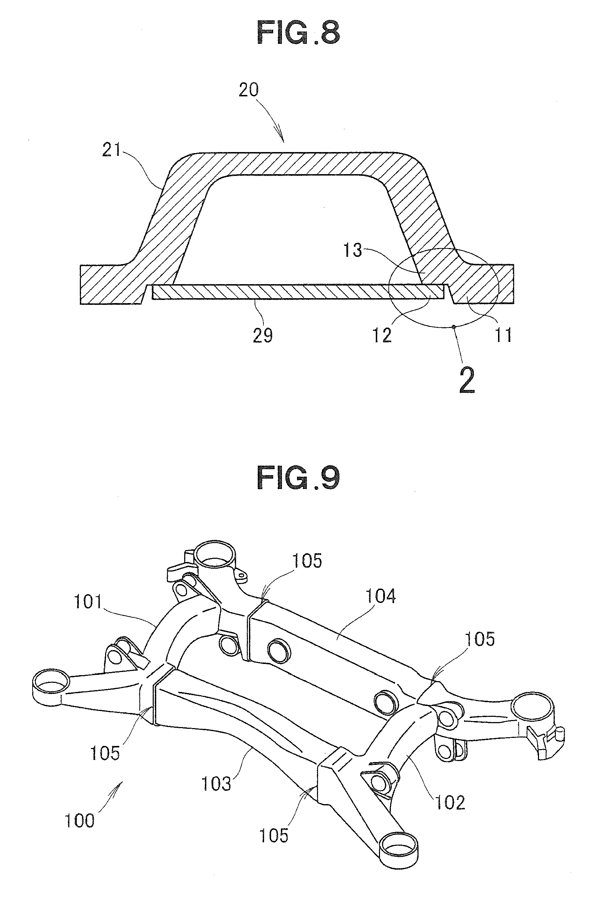

Fig. 8 is a cross-sectional view taken along line 8-8 of Fig. 7;
Fig. 9 is a perspective view showing a conventional weld structure; and

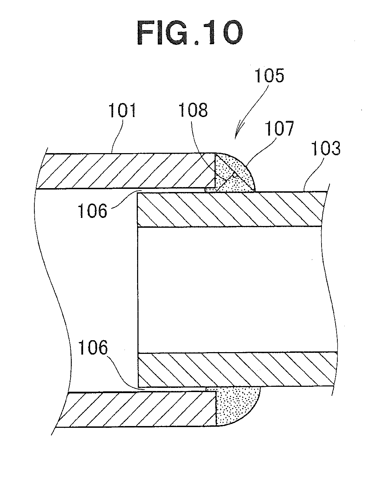

Fig. 10 is a cross-sectional view of a weld part of the conventional structure.

### DESCRIPTION OF EMBODIMENTS

Embodiments of the present invention will be described below with reference to the attached drawings.

An embodiment of the present invention will be described with reference to the drawings.

A pre-weld structure 10 is formed of an aluminum alloy cast member 11 and an aluminum or aluminum alloy wrought material 12, as shown in Fig. 1. These materials 11, 12 are integrated with each other by MIG welding at a later time.

A pre-weld groove shape is described in Fig. 2.

An end part of the cast member 11 is cut on an incline in the thickness direction to a height H from an upper surface 11a toward a lower surface 11b, as shown in Fig. 2. A section from the lower end to the end face of a chamfer 14 is cut out parallel to the lower surface 11b. As a result, an inserting portion 13 extending along the lower surface of the wrought material 12 is formed on the end part of the cast member 11.

The slope 14 is inclined so that a groove angle θ is 15 to 45° in relation to an end face 12a of the wrought material 12.

The wrought material 12 is separated from the slope 14 so that a root space L is obtained in which the bottom of the groove is 1.0 to 1.7 times the thickness T of the wrought material 12.

The height H of the slope 14 is somewhat greater than the thickness T of the wrought material 12, as shown in Fig. 2.

When MIG welding is performed on the groove in this form, there is no concern that molten metal will leak out because the inserting portion 13 assumes the role of a backing metal. The high-melting wrought material can be fully melted because molten metal accumulates in the groove. As a result, a bead 15 such as the one shown in Fig. 3 can be obtained.

The evaluation of the bead 15 was confirmed by an experiment.

### (Experimental example)

An experimental example according to the present invention will be described below. The present invention is not limited to the experimental example.

### ○ Sample material:

- Aluminum alloy cast member: AC4CH-T5 (ISO Al-Si₇Mg), thickness: 8 mm
- Aluminum alloy wrought material: 6NOI-T5, thickness: 3.5 mm

### ○ Groove form: Fig. 2. However, the groove angle θ, the slope height H, and the root space L were variable.

### ○ Welding conditions:

- Type: MIG welding
- Filler rod: A5356WY equivalent
- Electric current: 230 A
- Angle of rotation: 75°
- Angle of advance: 15°
- Welding speed: 70 cm/min

### ○ Verification of groove angle:

- Slope height H: 4.5 mm
- Root space L: 5mm
- Groove angle θ: 10°, 15°, 30°, 45°, 50°

Welding was performed under the above conditions, and the joint efficiency of the resulting joint was calculated. The results are shown in Fig. 4.

The best results were produced at θ= 30°, as shown in Fig. 4. The generally required joint efficiency is considered to be 70%, but when the efficiency was 80%, which allows for a 10% margin, the groove angle θ was in the range of 15 to 45°.

### ○ Verification of the outer-face difference (H-T):

The relationship between the thickness T of the wrought material 12 shown in Fig. 2 and the height H of the slope 14 was investigated. The results are shown in Fig. 5.

The horizontal axis in Fig. 5 is the outer-face difference (H-T), and T is 3.5 mm (constant). Therefore, the outer-face difference was 0 when H was 3.5 mm; 1 mm when H was 4.5 mm; and 2 mm when H was 5.5 mm. A test piece was cut out from the resulting joint and a tensile test was performed. The tensile strength was 1.13 at an outer-face difference of 1 mm, and 1.03 at an outer-face difference of 2 mm, where the tensile strength was set to 1.0 at an outer-face difference (H-T) of 0.

### ○ Verification of the root space L:

- Gap G: The opening (gap) between the upper surface of the inserting portion 13 and the lower surface of the wrought material 12 was set to 0, but the experiment was performed on two types of openings, one at 0 mm and the other at 1 mm.
- Slope height H: 4.5 mm
- Wrought material thickness T: 3.5 mm
- Root space L: 4 mm (L/T = 1.14), 5 mm (L/T = 1.42), 6 mm (L/T = 1.71)
- Groove angle θ: 30°

Welding was performed under the above conditions, and the joint efficiency of the resulting joint was calculated. The results are shown in Fig. 6.

The solid line in Fig. 6 shows a case in which the gap is 0, and the dashed line shows a case in which the gap is 1 mm.

Assuming that the required joint efficiency is 70%, the joint efficiency in the case of the solid line will exceed 70% if the root space is 1.0 (the wrought material thickness was set to 1.0) or greater.

An opening of 0.5 to 1.0 mm is preferred to facilitate insertion of the cast member 11 in the wrought material 12 in Fig. 1.

When the opening is 1.0 mm, the joint efficiency declines and falls below 70% at the horizontal axis point of 1.7, as shown by the dashed line.

A root space having points "a" to "b" shown in Fig. 6, in other words, having a wrought material thickness of 1.0 to 1.7, is recommended based on the aforementioned data.

An example in which the weld joint of the present invention is used in the subframe of a vehicle is described in Figs. 7 and 8.

The subframe 20 as a structure is formed of a front cross part 21 and a rear cross part 22 extending in the crosswise direction of the vehicle, front arm parts 23, 24 extending from both ends of the front cross part 21, rear arm parts 25, 26 extending from both ends of the rear cross part 22, and a left longitudinal part 27 and a right longitudinal part 28 extending in the longitudinal direction of the vehicle and connecting with the front cross part 21 and the rear cross part 22, as shown in Fig. 7.

The front cross part 21 and the rear cross part 22, the front arm parts 23, 24 and the rear arm parts 25, 26, and the left longitudinal part 27 and the right longitudinal part 28 are cast members based on an aluminum alloy.

The front cross part 21 is a channel shape that opens downward, as shown in Fig. 8. A channel has a large hollow portion and can be made lightweight. However, the strength of a hollow cross-section is less than that of a solid cross-section. In terms of strength, the bending stress of the widthwise center part is at the maximum.

As a countermeasure, a reinforcing plate 29 is added to the widthwise center part of the front cross part 21, as shown in Fig. 7.

The reinforcing plate 29 is a wrought material formed of one of aluminum or an aluminum alloy. The reinforcing plate 29 is brought against and welded to the front cross part 21 with the aim of covering the downward opening of the front cross part 21, which is a cast member, as shown in Fig. 8. In other words, the end part of the reinforcing plate 29 is the joint shape shown in Fig. 2, and is joined to the front cross part 21.

The center part is reinforced by the reinforcing plate 29 in the same manner as the front cross part 22, and the left and right longitudinal parts 27, 28 shown in Fig. 7.

The weld joint of the present invention is appropriate for a subframe of a vehicle, but may be used in other weld structures.

### INDUSTRIAL APPLICABILITY

The weld joint of the present invention is appropriate for a subframe of a vehicle.

### Legend

- 10: Structure
- 11: Cast member
- 12: Wrought material
- 12a: End part of wrought material
- 13: Inserting portion
- 14: Slope
- 15: Bead
- L: Root space
- T: Wrought material thickness
- θ: Groove angle

## Claims

1. A weld joint of an aluminum alloy member obtained by joining an end part of a wrought material formed of one of aluminum or an aluminum alloy to one end of a cast member formed of an aluminum alloy,
wherein the cast member has a slope extending from an upper surface of the cast member toward a lower surface until a midway of a thickness of the cast member, and an inserting portion extending along a lower surface of the wrought material from a lower end of the slope toward a distal end of the cast member,
a distance from the lower end of the slope to an end face at one end part of the wrought material is set at 1.0 to 1.7 times a thickness of the wrought material,
the slope is inclined so that a groove angle with the end face at one end of the wrought material is 15 to 45°, and
the groove is welded to cause the inserting portion to act as a backing metal.
